(19) Europäisches Patentamt / European Patent Office / Office européen des brevets

(11) **EP 3 578 995 B1**

(12) **EUROPÄISCHE PATENTSCHRIFT**

(45) Veröffentlichungstag und Bekanntmachung des Hinweises auf die Patenterteilung:
**06.07.2022   Patentblatt 2022/27**

(21) Anmeldenummer: **19174300.4**

(22) Anmeldetag: **14.05.2019**

(51) Internationale Patentklassifikation (IPC):
**G01P 21/00** $^{(2006.01)}$        **G01C 25/00** $^{(2006.01)}$
**G01D 18/00** $^{(2006.01)}$

(52) Gemeinsame Patentklassifikation (CPC):
**G01P 21/00; G01C 25/005**

(54) **VERFAHREN ZUR ONLINE-KALIBRIERUNG EINES SENSORS EINES FAHRZEUGS**

METHOD FOR ONLINE CALIBRATION OF A SENSOR OF A VEHICLE

PROCÉDÉ DE CALIBRAGE EN LIGNE D'UN CAPTEUR D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2018   DE 102018209167**

(43) Veröffentlichungstag der Anmeldung:
**11.12.2019   Patentblatt 2019/50**

(73) Patentinhaber: **Robert Bosch GmbH**
**70442 Stuttgart (DE)**

(72) Erfinder:
• **Stegmaier, Juergen**
  **72827 Wannweil (DE)**
• **Schnee, Jan**
  **71093 Weil Im Schoenbuch (DE)**

(56) Entgegenhaltungen:
DE-A1-102006 024 312     DE-A1-102015 115 282
JP-A- 2016 211 906

## Beschreibung

### Technisches Gebiet

Die Erfindung betrifft ein Verfahren zur Online-Kalibrierung eines Sensors eines Fahrzeugs, insbesondere eines Zweiradfahrzeugs.

Die Erfindung betrifft weiter ein System zur Online-Kalibrierung eines Sensors eines Fahrzeugs, insbesondere eines Zweiradfahrzeugs.

Obwohl die vorliegende Erfindung allgemein auf beliebige Fahrzeuge anwendbar ist, wird die vorliegende Erfindung in Bezug auf Elektro-Fahrräder beschrieben.

Obwohl die vorliegende Erfindung allgemein auf einen beliebigen Sensor eines Fahrzeugs anwendbar ist, wird die vorliegende Erfindung in Bezug auf einen Inertialsensor in einem Elektrofahrrad beschrieben.

### Stand der Technik

Nicht nur Elektrofahrräder sondern allgemein Fahrzeuge, insbesondere Zweiradfahrzeuge, werden immer häufiger mit Sensoren versehen, um beispielsweise den Fahrzustand zu ermitteln oder zu schätzen und anhand des geschätzten Fahrzustandes eine verbesserte Navigation, eine verbesserte Antriebsregelung oder auch eine Unfallerkennung zu ermöglichen. Hierzu werden insbesondere Inertialsensoren eingesetzt.

Inertialsensoren bestehen aus einem Gyroskop mit drei Freiheitsgraden und einem Accelerometer, ebenfalls mit drei Freiheitsgraden. MEMS-Inertialsensoren weisen üblicherweise Offset-Fehler beziehungsweise sogenannte Biases auf. Diese Offsets oder Biases sind zum Beispiel temperaturabhängig, ändern sich über die Lebenszeit und entstehen beispielsweise durch Lötprozesse in der Fertigung des Inertialsensors. Zur Kompensation der Biases ist es bekannt geworden, eine Offline-Kalibrierung "end-of-line" zu verwenden, auch über einen Temperaturbereich. Online-Kalibrierungsmethoden sind ebenfalls bekannt geworden. Ein Drehratensensor kann bezüglich der Sensorfehler im Stillstand kalibriert werden, da hier alle Achsen den Signalwert 0 Grad/s aufweisen müssen. Bei einem Beschleunigungssensor ist dies nicht möglich, da Informationen bezüglich der Ausrichtung des Beschleunigungssensors im Gravitationsfeld fehlen. Sind jedoch statische Phasen mit unterschiedlichen Orientierungen des Beschleunigungssensors durch eine bestimmte Anwendung gegeben, so können zum Beispiel mithilfe von Optimierungsalgorithmen die Biases anhand einer großen Variation von Orientierungszuständen geschätzt oder ermittelt werden. Um die Anzahl der Variationen zu verringern, ist es bekannt geworden, zusätzlich Messungen des Offset-kalibrierten Drehratensensors als auch ein nicht kalibriertes Magnetometer zu berücksichtigen, wie in der Nicht-Patent-Literatur Sabatini et al. "Kalman-Filter-Based Orientation Determination Using Inertial/Magnetic Sensors: Observability Analysis and Performance Evaluation", Sensors 2011, 11, 9182-9206; doi:10.3390/s111009182, beschrieben.

Weitere Kalibrierungsmethoden von Fahrzeugsensoren sind aus JP 2016 211906 A und DE 10 2015 115282 A1 bekannt.

### Offenbarung der Erfindung

In einer Ausführungsform stellt die Erfindung ein Verfahren zur Online-Kalibrierung eines Sensors eines Fahrzeugs, insbesondere eines Zweiradfahrzeugs bereit, umfassend die Schritte

- Ermitteln von ersten zumindest zweidimensionalen Beschleunigungsdaten anhand von Messwerten eines Beschleunigungssensors während einer Beschleunigungsphase des Fahrzeugs, wobei das Zweiradfahrzeug in einer Raumrichtung ausgerichtet ist.
- Ermitteln von zweiten zumindest zweidimensionalen Beschleunigungsdaten während einer beschleunigungsfreien Phase des Fahrzeugs, wobei das Zweiradfahrzeug in der gleichen Raumrichtung ausgerichtet ist,
- Ermitteln von bias-kompensierten Beschleunigungsdaten in der Ebene von Fahrzeuglängs- und -hochachse auf Basis der ermittelten ersten und zweiten Beschleunigungsdaten,
- Ermitteln von Biasdaten für den Sensor in zumindest einer Raumrichtung zumindest anhand der Fahrzeuggeschwindigkeit, und
- Kalibrieren des Sensors mittels der ermittelten Biasdaten und der bias-kompensierten Beschleunigungsdaten.

In einer weiteren Ausführungsform stellt die Erfindung ein System zur Online-Kalibrierung eines Sensors eines Fahrzeugs, insbesondere eines Zweiradfahrzeugs bereit, umfassend eine Ermittlungseinrichtung zum Ermitteln von ersten zumindest zweidimensionalen Beschleunigungsdaten anhand von Messwerten eines Beschleunigungssensors während einer Beschleunigungsphase des Fahrzeugs, wobei das Fahrzeug in einer Raumrichtung ausgerichtet ist, und zum Ermitteln von zweiten zumindest zweidimensionalen Beschleunigungsdaten während einer beschleunigungsfreien Phase des Fahrzeugs, wobei das Fahrzeug in der gleichen Raumrichtung ausgerichtet ist, eine Recheneinrichtung zum Ermitteln von bias-kompensierten Beschleunigungsdaten in der Ebene von Fahrzeuglängs- und -hochachse auf Basis der ermittelten ersten und zweiten Beschleunigungsdaten, eine Biaseinrichtung zum Ermitteln von Biasdaten für den Sensor in zumindest einer Raumrichtung zumindest anhand der Fahrzeuggeschwindigkeit, und eine Kalibriereinrichtung zum Kalibrieren des Sensors mittels der ermittelten Biasdaten und der bias-kompensierten Beschleunigungsdaten.

Mit anderen Worten kann anhand von fahrzeugspezifischen Bewegungsmustern eine Online-Kalibrierung eines Sensors ermöglicht werden.

Einer der damit erzielten Vorteile ist, dass damit eine Offline-Kalibrierung nicht mehr notwendig ist, was die Kosten für die Herstellung des Sensors reduziert. Darüber hinaus können altersbedingte und temperaturabhängige Offsets beziehungsweise Biases laufend kompensiert werden. Ein weiterer Vorteil ist die hohe Flexibilität, denn jedes Fahrzeug weist Beschleunigungen und Verzögerungen auf und gegebenenfalls auch spezifische Bewegungsmuster wie Kippbewegungen. Eine Einschränkung auf bestimmte Bewegungszustände, insbesondere statische, zur Kalibrierung entfällt damit.

Weitere Merkmale, Vorteile und weitere Ausführungsformen der Erfindung sind im Folgenden beschrieben oder werden dadurch offenbar.

Gemäß einer vorteilhaften Weiterbildung werden beim Ermitteln der ersten und/oder zweiten Beschleunigungsdaten Gravitationsdaten der Erdbeschleunigung und/oder vorhandene Biasdaten ermittelt. Vorteil hiervon ist, dass damit auf einfache Weise bias-kompensierte Beschleunigungsdaten bereitgestellt werden können.

Gemäß einer weiteren vorteilhaften Weiterbildung werden zum Kalibrieren des Sensors zusätzlich fahrzeugspezifische Bewegungsmuster ermittelt. Damit kann der Sensor auf besonders einfache Weise hinreichend genau kalibriert werden.

Gemäß einer weiteren vorteilhaften Weiterbildung werden die fahrzeugspezifischen Bewegungsmuster anhand von Kipp-Lenk-Daten des Fahrzeugs ermittelt, insbesondere wobei die Kipp-Lenk-Daten mittels Daten eines Gyroskops ermittelt werden. Damit können auf einfache und gleichzeitig zuverlässige Weise fahrzeugspezifische Bewegungsmuster ermittelt werden. Werden die Kipp-Lenk-Daten anhand von Werten eines Gyroskops ermittelt, wird die Flexibilität hinsichtlich der Anordnung des Sensors am Fahrzeug erhöht, da dieser damit im Wesentlichen frei an jeder Position am Fahrzeug angeordnet werden kann.

Gemäß einer weiteren vorteilhaften Weiterbildung wird zum Ermitteln der Kipp-Lenk-Daten eine Frequenzanalyse von Gyroskopdaten hinsichtlich Amplitudenmaxima durchgeführt. Einer der damit erzielten Vorteile ist, dass damit auf zuverlässige Weise geeignete Kipp-Lenk-Daten bereitgestellt werden können.

Gemäß einer weiteren vorteilhaften Weiterbildung wird bei einem Fahrzeug in Form eines Zweiradfahrzeugs zum Ermitteln der Kipp-Lenk-Daten bei einer bekannten Frequenz einer Tretbewegung zum Antrieb des Zweiradfahrzeugs die jeweilige korrespondierende Amplitude von Gyroskopdaten ermittelt. Damit kann auf eine aufwändige Frequenzanalyse verzichtet werden, was Rechenzeit reduziert.

Gemäß einer weiteren vorteilhaften Weiterbildung werden die bias-kompensierten Beschleunigungsdaten mittels Daten zumindest eines weiteren Sensors hinsichtlich einer vertikalen Verkippung kompensiert. Vorteil hiervon ist, dass beispielsweise eine Verkippung von Beschleunigungs- oder Verzögerungsvektoren durch eine Federung von Federelementen des Fahrzeugs kompensiert werden kann.

Gemäß einer weiteren vorteilhaften Weiterbildung wird die Kompensation der vertikalen Verkippung der bias-kompensierten Beschleunigungsdaten anhand einer durchfahrenen Steigung des Fahrzeugs durchgeführt. Damit lässt sich auf besonders einfache Weise ein Einfluss von Federelementen des Fahrzeugs kompensieren.

Gemäß einer weiteren vorteilhaften Weiterbildung erfolgt das Ermitteln der Biasdaten für den Sensor in zumindest einer Richtung durch Schätzen der Biasdaten anhand der Geschwindigkeit des Fahrzeugs und/oder anhand von Werten zumindest eines zusätzlichen Sensors. Damit lässt sich auf einfache und zuverlässige Weise eine Schätzung mit ausreichender Genauigkeit für die Biasdaten bereitstellen.

Gemäß einer weiteren vorteilhaften Weiterbildung wird der zumindest eine weitere und/oder zusätzliche Sensor in Form eines Drucksensors und/oder eines GPS-Sensors bereitgestellt. Vorteil eines GPS-Sensors ist, dass eine Vielzahl von Daten, beispielsweise eine aktuelle Geschwindigkeit, eine aktuelle Position sowie die aktuelle Höhe bereitgestellt werden.

Gemäß einer weiteren vorteilhaften Weiterbildung werden zumindest teilweise Daten je Raumrichtung bereitgestellt, vorzugsweise als ein Vektor. Dies ermöglicht eine einfache und gleichzeitig zuverlässige Kompensation von Biases des Sensors.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugzeichen auf gleiche oder ähnliche oder funktional gleiche Bauteile oder Elemente beziehen.

**Kurze Beschreibung der Zeichnungen**

Dabei zeigt

Figur 1   Teilschritte eines Verfahrens gemäß einer Ausführungsform der vorliegenden Erfindung;

Figur 2   Teilschritte eines Verfahrens sowie ein Zweiradfahrzeug gemäß einer Ausführungsform der vorliegenden Erfindung;

Figur 3   Teilschritte eines Verfahrens gemäß einer Ausführungsform der vorliegenden Erfindung;

Figur 4   in schematischer Form ein Verfahren gemäß einer Ausführungsform der vorliegenden Erfindung; und

Figur 5   ein Verfahren gemäß einer weiteren Ausführungsform der vorliegenden Erfindung.

**Ausführungsformen der Erfindung**

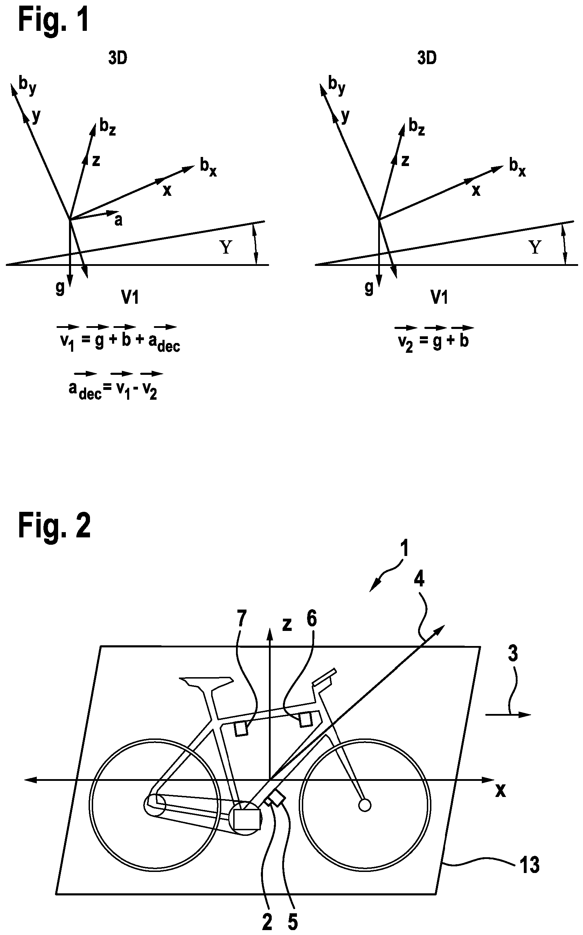

Figur 1 zeigt Teilschritte eines Verfahrens gemäß einer Ausführungsform der vorliegenden Erfindung und Figur 2 zeigt Teilschritte eines Verfahrens sowie ein Zweiradfahrzeug gemäß einer Ausführungsform der vorliegenden Erfindung.

In Figur 1 sind für ein Zweiradfahrzeug 1 jeweils Beschleunigungs- beziehungsweise Verzögerungsvorgänge sowie die Kompensation der Erdbeschleunigung und Sensor-Offsets gezeigt. In Figur 2 ist bei einem Zweiradfahrrad 1 die vertikale Fahrradebene mit Verzögerungsvektor und ein Kipp-Lenk-Vektor gezeigt.

In Figur 1 auf der linken Seite ist die Situation bei Vorliegen einer Beschleunigung, hier bei einem Abbremsen eines Zweiradfahrzeugs 1, gezeigt. Während der Beschleunigung werden sowohl der Beschleunigungsvektor $\vec{a}_{dec}$ als auch der Gravitationsvektor $\vec{g}$ und der Biasvektor $\vec{b}$ in einer ersten Messung bestimmt. In einer zweiten Messung kurz vor oder nach der ersten Messung werden nur der Gravitationsvektor $\vec{g}$ und der Biasvektor $\vec{b}$ bestimmt, wenn keine Beschleunigung vorliegt und die Ausrichtung beziehungsweise Orientierung des Zweiradfahrzeugs 1 sich nicht verändert hat. Ob diese sich verändert hat, kann mithilfe eines Gyroskops überprüft werden.

Durch eine Subtraktion der Vektoren $\vec{v1}$ -$\vec{v2}$ aus den beiden Messungen erhält man einen bias-kompensierten Beschleunigungsvektor, welcher innerhalb der vertikalen Fahrradrahmenebene 13 in Fahrtrichtung 3 des Zweiradfahrzeugs 1 oder entgegen der Fahrtrichtung bei einem Verzögerungsvorgang zeigt. Geringe vertikale Abweichungen dieses resultierenden Vektors $\vec{a}_{dec}$ durch Veränderung eines Fahrwerks des Zweiradfahrzeugs 1 sind hierbei möglich, zum Beispiel das Eintauchen einer Federgabel beim Verzögern.

Weiterhin wird ein fahrzeugspezifisches Bewegungsmuster, hier eine Kipp- und Ausgleichsbewegung des Fahrers und des Zweiradfahrzeugs 1 zur Stabilisierung der aufrechten Haltung des Systems während der Fahrt genutzt. Zweiradfahrzeuge 1 sind, aufgrund von nur zwei Berührpunkten zum Boden, instabil. Somit neigt ein Zweiradfahrzeug 1 dazu, in eine Richtung zu kippen. Eine Stabilisierungsmöglichkeit ist ein Einlenken durch den Fahrer. Dadurch erfolgt eine Beschleunigung des Gesamtsystems Fahrer und Zweiradfahrzeug 1 durch die Zentrifugalbeschleunigung in die entgegengesetzte Richtung. Es liegt eine seitliche Pendelbewegung vor. Diese Pendelbewegung weist, wenn das Zweiradfahrzeug 1 durch Pedallieren antreibbar ist, die gleiche Frequenz auf wie eine Trittfrequenz des Fahrers. Anhand einer Frequenzanalyse der Gyroskopdaten, wobei die maximale Signalstärke entlang der drei Achsen des Gyroskops im Frequenzspektrum dabei die Stabilisierungsbewegung, also die Kipp-Lenk-Bewegung, beschreibt, lassen sich anhand der Maxima/Minima Kipp-Lenk-Daten ermitteln. Bei bekannter Trittfrequenz, zum Beispiel bei Elektrofahrrädern, kann auch nur die Signalamplitude der Trittfrequenz analysiert werden, was zu einer Reduzierung des Rechenaufwands führt. Die drei Signalstärken sind die Komponenten eines Kipp-Lenk-Vektors 4, weil dieser Biasbeziehungsweise Offset-frei ist und welcher aufgrund der beiden beschriebenen Rotationen ebenfalls in der vertikalen Fahrradebene 13 liegt. Der Begriff "Rotation" bezeichnet hierbei eine Bewegung oder Drehung um eine Achse bei einer Ausgleichsbewegung eines Zweiradfahrzeugs. Im vorliegenden Fall dienen die beiden beschriebenen Rotationen zur Querstabilisierung des Zweiradfahrzeugs mit einer Kipp-Bewegung, erste Rotation um die x-Achse/Fahrzeuglängsachse, und mit einer Ausgleichslenkbewegung, zweite Rotation um die z-Achse/Fahrzeughochachse.

Die Vorzeichen des Kipp-Lenk-Vektors 4 gehen aus der genannten Frequenzanalyse nicht hervor. Hier sind insbesondere acht Vorzeichenkombinationen möglich, wobei jeweils zwei redundant sind; nur die Vektorrichtung ist unterschiedlich. Mit den vier verbleibenden möglichen Vorzeichenkombinationen können zum Beispiel weitere Frequenzanalysen durchgeführt werden. Das dreidimensionale Signal wird mithilfe jeder Vorzeichenkombination des Kipp-Lenk-Vektors 4 rotiert, das Ergebnis ist jeweils ein eindimensionales Signal. Das Signal mit der maximalen Amplitude weist dann die "richtige" Vorzeichenkombination auf. Zur Ermittlung des Kipp-Lenk-Vektors sind jedoch auch andere Verfahren denkbar. Die beiden bestimmten Vektoren der vertikalen Fahrradebene 13 werden dann mithilfe des Kreuzprodukts multipliziert, sodass man den Normalenvektor, hier als Lateralvektor, der vertikalen Fahrradebene 13 erhält:

$$\text{Lateral-Vektor} = \text{Kipp-Lenk-Vektor} \times \text{Beschleunigungsvektor}$$

Dieser Lateralvektor entspricht der lateralen Achse/y-Achse des Fahrradkoordinatensystems. Zeigt der Verzögerungs- beziehungsweise der Beschleunigungsvektor direkt in Fahrtrichtung 3, also wenn zum Beispiel keine Federelemente zum Einfedern vorhanden sind, so zeigt der Beschleunigungsvektor entlang der x-Achse des Fahrradkoordinatensystems. Der Vektor eines Kreuzprodukts aus Beschleunigungsvektor und Lateralvektor zeigt in Richtung der Hoch-/z-Achse des Fahrradkoordinatensystems. Wird die aktuelle Steigung des Zweiradfahrzeugs gemessen, kann der beschriebene Einfluss von Nickbewegungen durch Einfedern in Federelemente kompensiert werden. Eine vertikale Verkippung des Beschleunigungsbeziehungsweise Verzögerungsvektors wird damit ausgeglichen. Mithilfe der drei Vektoren als Zeilenvektoren wird nun die Rotationsmatrix aufgestellt:

$$rotMat = \begin{pmatrix} Fahrtrichtung_x \\ Lateralvektor_y \\ Hochachse_z \end{pmatrix}$$

Die Rotationsmatrix rotMat beschreibt die Rotation von Daten, die im Sensor-koordinatensystem gemessen wurden, in das Fahrradkoordinatensystem. Anhand dieser Rotationsmatrix ist es möglich, unabhängig von der Einbaulage des zu kalibrierenden Sensors Sensordaten im Fahrradkoordinatensystem darzustellen. Mit anderen Worten ist jetzt die Einbaulage des Sensors kalibriert.

In einem weiteren Schritt wird nun im Fahrradkoordinatensystem eine Schätzung oder eine Ermittlung des Biasvektors durchgeführt. Liegt eine konstante Fahrt vor, beispielsweise durch eine Überprüfung der Fahrzeuggeschwindigkeit und liegt keine Änderung der Gyroskopdaten vor, so muss die laterale Beschleunigung in Richtung der y-Achse gleich null sein. Wird eine Abweichung hiervon erkannt, so ist dies die y-Koordinate des Biasvektors im Fahrradkoordinatensystem. Für die x- und z-Achse kann die Schätzung beispielsweise anhand der Zweiradfahrzeuggeschwindigkeit und/oder mittels zusätzlicher Sensoren, wie ein GPS-Sensor oder Druck-Sensor erfolgen. Der im Fahrradkoordinatensystem geschätzte Biasvektor wird mithilfe der bereits bestimmten Rotationsmatrix rotMat in das Sensorkoordinatensystem transformiert und hier von den gemessenen Werten abgezogen. Der Sensor ist damit kalibriert.

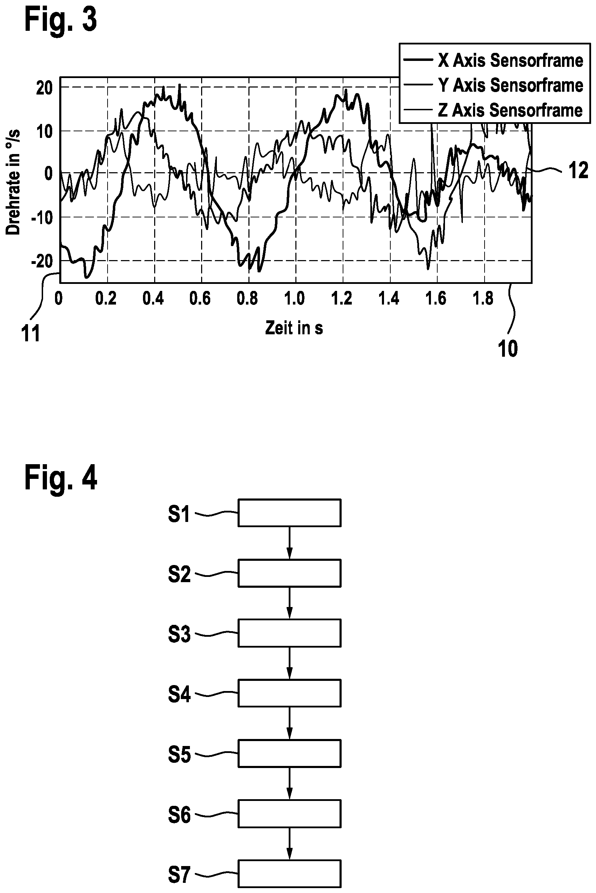

Figur 3 zeigt Teilschritte eines Verfahrens gemäß einer Ausführungsform der vorliegenden Erfindung.

In Figur 3 sind Daten eines Gyroskops gezeigt, genauer ist Drehrate 11 in Grad pro Sekunde über der Zeit 10 in Sekunden jeweils entlang der x-, y- und z-Achse im Sensorkoordinatensystem aufgetragen. Anhand dieser Daten 12 lässt sich eine deutliche Pendelbewegung entlang der y-Achse anhand der Daten erkennen. Diese erfolgt zur Stabilisierung der aufrechten Lage des Zweiradfahrzeugs 1.

Figur 4 zeigt in schematischer Form ein Verfahren gemäß einer Ausführungsform der vorliegenden Erfindung.

In Figur 4 ist ein Ablaufdiagramm eines Verfahrens gemäß einer Ausführungsform der vorliegenden Erfindung gezeigt.

Zunächst werden Beschleunigungsdaten im Sensorkoordinatensystem in einem ersten Schritt S1 gemessen.

In einem zweiten Schritt S2 erfolgt eine Erkennung von zweiradfahrradspezifischen Bewegungsmustern mithilfe von Zusatzinformationen, insbesondere Kipp-Lenk-Daten.

In einem dritten Schritt S3 erfolgt eine Bestimmung einer Rotationsmatrix aus Bewegungsmustern des Zweiradfahrzeugs zur Transformation zwischen Sensor- und Zweiradfahrzeugkoordinatensystem.

In einem vierten Schritt S4 werden die Beschleunigungsdaten vom Sensorkoordinatensystem ins Zweiradfahrzeugkoordinatensystem transformiert.

In einem fünften Schritt S5 werden Biasdaten im Zweiradfahrzeugkoordinatensystem bestimmt.

In einem sechsten Schritt S6 erfolgt die Transformation der Biasdaten in das Sensorkoordinatensystem anhand der Rotationsmatrix und in einem siebten Schritt S7 erfolgt die Kalibrierung des Sensors anhand der Biasdaten im Sensorkoordinatensystem.

Ein oder mehrere der Schritte S1-S7 können mehrfach ausgeführt werden, beispielsweise in einer Feedbackschleife, sodass kontinuierlich die Kalibrierung des Sensors verbessert, also genauer wird. Es ist ebenfalls möglich einzelne Schritte mehrfach durchzuführen und die in den Schritten ermittelten Daten vor einer Weiterverarbeitung statistisch aufzubereiten, beispielsweise Mittelwerte oder dergleichen zu ermitteln, und diese dann für die Weiterverarbeitung zu verwenden.

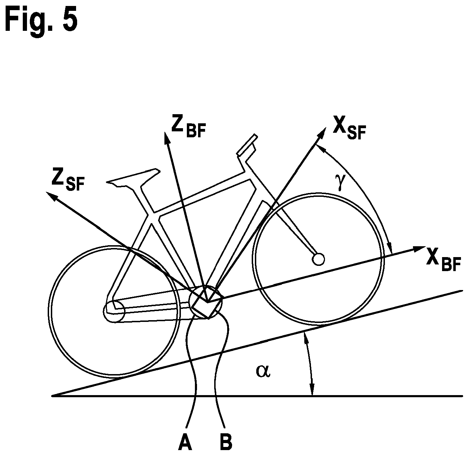

In Figur 5 ist ein Verfahren gemäß einer weiteren Ausführungsform der vorliegenden Erfindung gezeigt.

In einer weiteren Ausführungsform kann die Anzahl der Freiheitsgrade durch Wahl der Einbaulage des zu kalibrierenden Sensors B reduziert werden, beispielsweise durch Anordnen des Sensors auf der Leiterplatte der Antriebseinheit A. Dabei wird die Ebene der Leiterplatte der Antriebseinheit A, wenn die Ebene der Antriebskette parallel zur vertikalen Zweiradfahrzeugebene angeordnet ist, parallel zur vertikalen Fahrzeugebene 13 angeordnet. Die Antriebseinheit A kann mit unterschiedlichen Einbauwinkeln innerhalb dieser vertikalen Fahrzeugebene 13 verbaut werden. Hieraus resultiert die Reduzierung der Einbaulagenschätzung auf einen einzigen Einbauwinkel $\gamma$. Durch diese Anordnung liegen bereits zwei Sensorachsen in der vertikalen Fahrzeugebene 13, beziehungsweise alle Sensorachsen haben eine konstante Beziehung zu der vertikalen Fahrzeugebene 13, welche nicht von der Einbaulage der Antriebseinheit A abhängig ist, die einen rotatorischen Freiheitsgrad darstellt,

Damit ist es möglich, den Sensor B nur durch die Auswertung von Beschleunigungs- beziehungsweise Verzögerungsvorgängen zu kalibrieren. Bei Fahrzeugen in Form von Fahrrädern ohne Federelemente kann davon ausgegangen werden, dass die Richtung der erkannten Verzögerungsvektoren der Fahrtrichtung des Fahrrads entspricht. Bei Fahrrädern mit Federelementen entsteht eine leichte Verzerrung, welche jedoch entweder vernachlässigt oder durch weitere Sensoren wie beispielsweise GPS, Druck, et cetera, kompensiert werden kann. Die Fahrtrichtung entspricht hier der x-Achse 3 im Fahrzeug-Koordinatensystem BF. Man erhält diese durch die Bestimmung des Winkels $\gamma$ zwischen den beiden ermittelten Verzögerungsvektoren im Sensor-Koordinatensystem SF $x_{SF}$, $z_{SF}$ und dem Fahrzeugkoordinatenachsen $x_{BF}$, $z_{BF}$:

$$\gamma = \mathrm{atan} \left( \frac{a_{dec,x,normed}}{a_{dec,z,normed}} \right)$$

Hier wird davon ausgegangen, dass bereits zwei Sensorachsen $x_{SF}$, $z_{SF}$ in der vertikalen Fahrradebene 13 liegen. Ist dies nicht Fall muss die konstante Beziehung zwischen Sensor und Leiterplatte der Antriebseinheit ebenfalls berücksichtigt werden. Orthogonal zu dieser x-Achse liegt innerhalb der vertikalen Fahrradebene 13 die z-Achse. Beide Achsen des Fahrzeug-Koordinatensystems $x_{BF}$, $z_{BF}$ erhält man über folgende Drehmatrix werden hier ebenfalls nur für den Fall mit bereits zwei Sensorachsen innerhalb der vertikalen Fahrradebene 13 dargestellt.

$$rm_{SF2BF} = \begin{bmatrix} \sin(\gamma) & -\cos(\gamma) \\ \cos(\gamma) & \sin(\gamma) \end{bmatrix}$$

Ist eine Korrektur der Fehler durch Federelemente erwünscht, kann der Winkel $\gamma$ durch Zusatzsensorik korrigiert werden.

Zusammenfassend weist zumindest eine der Ausführungsformen der Erfindung zumindest einen der folgenden Vorteile auf:

- Keine Offline-Kalibrierung notwendig.
- Reduzierung von Kosten.
- Kompensation von Offsets.
- Hohe Flexibilität.

Obwohl die vorliegende Erfindung anhand bevorzugter Ausführungsbeispiele beschrieben wurde, ist sie nicht darauf beschränkt, sondern auf vielfältige Weise modifizierbar.

**Patentansprüche**

1. Verfahren zur Online-Kalibrierung eines Sensors (B) eines Fahrzeugs (1), insbesondere eines Zweiradfahrzeugs, umfassend die Schritte

 - Ermitteln von ersten zumindest zweidimensionalen Beschleunigungsdaten ($\vec{g}, \vec{b}, \vec{a}_{,dec}$)anhand von Messwerten eines Beschleunigungssensors (2) während einer Beschleunigungsphase des Fahrzeugs (1), wobei das Fahrzeug (1) in einer Raumrichtung (3) ausgerichtet ist.

- Ermitteln von zweiten zumindest zweidimensionalen Beschleunigungsdaten ($\vec{g}$, $\vec{b}$) während einer beschleunigungsfreien Phase des Fahrzeugs (1), wobei das Fahrzeug in der gleichen Raumrichtung (3) ausgerichtet ist,
- Ermitteln von bias-kompensierten Beschleunigungsdaten ($\vec{a}_{dec}$) in der Ebene (13) von Fahrzeuglängs- und -hochachse auf Basis der ermittelten ersten und zweiten Beschleunigungsdaten ($\vec{g}$, $\vec{b}$, $\vec{a}_{dec}$;$\vec{g}$, $\vec{b}$),
- Ermitteln von Biasdaten für den Sensor (B) in zumindest einer Raumrichtung zumindest anhand der Fahrzeuggeschwindigkeit, und
- Kalibrieren des Sensors (B) mittels der ermittelten Biasdaten und der bias-kompensierten Beschleunigungsdaten.

2. Verfahren gemäß Anspruch 1, wobei beim Ermitteln der ersten und/oder zweiten Beschleunigungsdaten ($\vec{g}$, $\vec{b}$, $\vec{a}_{dec}$; $\vec{g}$, $\vec{b}$), Gravitationsdaten ($\vec{g}$) der Erdbeschleunigung und/oder vorhandene Biasdaten ($\vec{b}$) ermittelt werden.

3. Verfahren gemäß einem der Ansprüche 1-2, wobei zum Kalibrieren des Sensors (B) zusätzlich fahrzeugspezifische Bewegungsmuster ermittelt werden.

4. Verfahren gemäß Anspruch 3, wobei die fahrzeugspezifischen Bewegungsmuster anhand von Kipp-Lenk-Daten (4) des Fahrzeugs ermittelt werden, insbesondere wobei die Kipp-Lenk-Daten (4) mittels Daten eines Gyroskops (5) ermittelt werden.

5. Verfahren gemäß Anspruch 4, wobei zum Ermitteln der Kipp-Lenk-Daten (4) eine Frequenzanalyse von Gyroskopdaten hinsichtlich Amplitudenmaxima durchgeführt wird.

6. Verfahren gemäß einem der Ansprüche 4-5, wobei bei einem Fahrzeug in Form eines Zweiradfahrzeugs (1) zum Ermitteln der Kipp-Lenk-Daten (4) bei einer bekannten Frequenz einer Tretbewegung zum Antrieb des Zweiradfahrzeugs (1) die jeweilige korrespondierende Amplitude von Gyroskopdaten ermittelt wird.

7. Verfahren gemäß einem der Ansprüche 1-6, wobei die bias-kompensierten Beschleunigungsdaten ($\vec{a}_{dec}$) mittels Daten zumindest eines weiteren Sensors (6) hinsichtlich Daten einer vertikalen Verkippung kompensiert wird.

8. Verfahren gemäß Anspruch 7, wobei die Kompensation der vertikalen Verkippung der bias-kompensierten Beschleunigungsdaten ($\vec{a}_{dec}$) anhand einer durchfahrenen Steigung des Fahrzeugs (1) durchgeführt wird.

9. Verfahren gemäß einem der Ansprüche 1-8, wobei das Ermitteln der Biasdaten ($\vec{b}$) für den Sensor in zumindest einer Richtung eine Schätzung der Biasdaten anhand der Geschwindigkeit des Fahrzeugs (1) und/oder mittels Werten zumindest eines zusätzlichen Sensors (7) erfolgt.

10. Verfahren gemäß Anspruch 7-9, wobei der zumindest eine weitere und/oder zusätzliche Sensor (6, 7) in Form eines Drucksensors und/oder eines GPS-Sensors bereitgestellt wird.

11. Verfahren gemäß einem der Ansprüche 1-10, wobei zumindest teilweise Daten ($\vec{g}$, $\vec{b}$, $\vec{a}_{dec}$,4) je Raumrichtung bereitgestellt werden, vorzugsweise als ein Vektor.

12. System zur Online-Kalibrierung eines Sensors (B) eines Fahrzeugs, insbesondere eines Zweiradfahrzeugs, umfassend,

eine Ermittlungseinrichtung eingerichtet zum Ermitteln von ersten zumindest zweidimensionalen Beschleunigungsdaten ($\vec{g}$, $\vec{b}$, $\vec{a}_{dec}$) anhand von Messwerten eines Beschleunigungssensors (2) während einer Beschleunigungsphase des Fahrzeugs (1), wobei das Fahrzeug (1) in einer Raumrichtung (3) ausgerichtet ist, und zum Ermitteln von zweiten zumindest zweidimensionalen Beschleunigungsdaten ($\vec{g}$, $\vec{b}$) während einer beschleunigungsfreien Phase des Fahrzeugs, wobei das Fahrzeug in der gleichen Raumrichtung ausgerichtet ist, eine Recheneinrichtung eingerichtet zum Ermitteln von bias-kompensierten Beschleunigungsdaten ($\vec{a}_{dec}$) in der Ebene von Fahrzeuglängs- und -hochachse auf Basis der ermittelten ersten und zweiten Beschleunigungsdaten ($\vec{g}$, $\vec{b}$, $\vec{a}_{dec}$;$\vec{g}$, $\vec{b}$), eine Biaseinrichtung eingerichtet zum Ermitteln von Biasdaten für den Sensor in zumindest einer Raumrichtung zumindest anhand der Fahrzeuggeschwindigkeit, und eine Kalibriereinrichtung eingerichtet zum Kalibrieren des Sensors mittels der ermittelten Biasdaten und der bias-kompensierten Beschleunigungsdaten.

**Claims**

1. Method for online calibration of a sensor (B) of a vehicle (1), in particular a two-wheeled vehicle, comprising the steps of

- ascertaining first at least two-dimensional acceleration data $(\vec{g}, \vec{b}, \vec{a}_{dec})$ on the basis of measured values from an acceleration sensor (2) during an acceleration phase of the vehicle (1), the vehicle (1) being oriented in a spatial direction (3),
- ascertaining second at least two-dimensional acceleration data $(\vec{g}, \vec{b})$ during an acceleration-free phase of the vehicle (1), the vehicle being oriented in the same spatial direction (3),
- ascertaining bias-compensated acceleration data $(\vec{a}_{dec})$ in the plane (13) of the vehicle longitudinal and vertical axes on the basis of the ascertained first and second acceleration data $(\vec{g}, \vec{b}, \vec{a}_{dec}; \vec{g}, \vec{b})$,
- ascertaining bias data for the sensor (B) in at least one spatial direction at least on the basis of the vehicle speed, and
- calibrating the sensor (B) by means of the ascertained bias data and the bias-compensated acceleration data.

2. Method according to Claim 1, wherein the ascertaining of the first and/or second acceleration data $(\vec{g}, \vec{b}, \vec{a}_{dec}; \vec{g}, \vec{b})$ results in gravitation data $(\vec{g})$ for the acceleration due to gravity and/or existing bias data $(\vec{b})$ being ascertained.

3. Method according to either of Claims 1-2, wherein the sensor (B) is calibrated by additionally ascertaining vehicle-specific motion patterns.

4. Method according to Claim 3, wherein the vehicle-specific motion patterns are ascertained on the basis of tilting-steering data (4) of the vehicle, in particular wherein the tilting-steering data (4) are ascertained by means of data from a gyroscope (5).

5. Method according to Claim 4, wherein the tilting-steering data (4) are ascertained by performing a frequency analysis of gyroscope data with regard to amplitude maxima.

6. Method according to either of Claims 4-5, wherein for a vehicle in the form of a two-wheeled vehicle (1), the tilting-steering data (4) are ascertained by ascertaining the respective corresponding amplitude of gyroscope data for a known frequency of a pedalling motion for driving the two-wheeled vehicle (1).

7. Method according to one of Claims 1-6, wherein the bias-compensated acceleration data $(\vec{a}_{dec})$ are compensated for with regard to data concerning a vertical tilt by means of data from at least one further sensor (6).

8. Method according to Claim 7, wherein the vertical tilt of the bias-compensated acceleration data $(\vec{a}_{dec})$ is compensated for on the basis of a gradient travelled through by the vehicle (1).

9. Method according to one of Claims 1-8, wherein the bias data $(\vec{b})$ for the sensor in at least one direction are ascertained by estimating the bias data on the basis of the speed of the vehicle (1) and/or by means of values from at least one additional sensor (7).

10. Method according to Claims 7-9, wherein the at least one further and/or additional sensor (6, 7) is provided in the form of a pressure sensor and/or a GPS sensor.

11. Method according to one of Claims 1-10, wherein data $(\vec{g}, \vec{b}, \vec{a}_{dec}, 4)$ are at least sometimes provided for each spatial direction, preferably as a vector.

12. System for online calibration of a sensor (B) of a vehicle, in particular a two-wheeled vehicle, comprising

an ascertaining device configured to ascertain first at least two-dimensional acceleration data $(\vec{g}, \vec{b}, \vec{a}_{dec})$ on the basis of measured values from an acceleration sensor (2) during an acceleration phase of the vehicle (1), the vehicle (1) being oriented in a spatial direction (3), and to ascertain second at least two-dimensional acceleration data $(\vec{g}, \vec{b})$ during an acceleration-free phase of the vehicle, the vehicle being oriented in the same spatial direction,
a computing device configured to ascertain bias-compensated acceleration data $(\vec{a}_{dec})$ in the plane of the vehicle longitudinal and vertical axes on the basis of the ascertained first and second acceleration data ($\vec{g}$, $\vec{b}$, $\vec{a}_{dec}$; $\vec{g}$, $\vec{b}$), a bias device configured to ascertain bias data for the sensor in at least one spatial direction at least on the basis of the vehicle speed, and

a calibration device configured to calibrate the sensor by means of the ascertained bias data and the bias-compensated acceleration data.

**Revendications**

1. Procédé d'étalonnage en ligne d'un capteur (B) d'un véhicule (1), notamment d'un véhicule à deux roues, ledit procédé comprenant les étapes suivantes :

    - déterminer des premières données d'accélération au moins bidimensionnelles ($\vec{g}$, $\vec{b}$, $\vec{a}_{dec}$) à partir de valeurs de mesure d'un capteur d'accélération (2) pendant une phase d'accélération du véhicule (1), le véhicule (1) étant orienté dans une direction spatiale (3),
    - déterminer des deuxièmes données d'accélération au moins bidimensionnelles ($\vec{g}$, $\vec{b}$) pendant une phase sans accélération du véhicule (1), le véhicule étant orienté dans la même direction spatiale (3),
    - déterminer des données d'accélération à polarisation compensée ($\vec{a}_{dec}$) dans le plan (13) de l'axe longitudinal et vertical du véhicule sur la base des premières et deuxièmes données d'accélération déterminées ($\vec{g}$, $\vec{b}$, $\vec{a}_{dec}$; $\vec{g}$, $\vec{b}$),
    - déterminer des données de polarisation pour le capteur (B) dans au moins une direction spatiale au moins sur la base de la vitesse du véhicule, et
    - étalonner le capteur (B) à l'aide des données de polarisation déterminées et des données d'accélération à polarisation compensée.

2. Procédé selon la revendication 1, des données de gravitation ($\vec{g}$) de l'accélération due à la gravité et/ou des données de polarisation existantes ($\vec{b}$), étant déterminées lors de la détermination des premières et/ou deuxièmes données d'accélération ($\vec{g}$, $\vec{b}$, $\vec{a}_{dec}$; $\vec{g}$, $\vec{b}$).

3. Procédé selon l'une des revendications 1 à 2, des modèles de mouvement spécifiques au véhicule étant en outre déterminés pour étalonner le capteur (B).

4. Procédé selon la revendication 3, les modèles de mouvement spécifiques au véhicule étant déterminés à l'aide de données de direction et d'inclinaison (4) du véhicule, en particulier les données de direction et d'inclinaison (4) étant déterminées à l'aide de données d'un gyroscope (5).

5. Procédé selon la revendication 4, une analyse fréquentielle des données de gyroscope en ce qui concerne les maxima d'amplitude étant effectuée pour déterminer les données de direction et d'inclinaison (4).

6. Procédé selon l'une des revendications 4-5, dans un véhicule se présentant sous la forme d'un véhicule à deux roues (1), pour déterminer les données de direction et d'inclinaison (4) à une fréquence connue d'un mouvement de pédalage destiné à entraîner le véhicule à deux roues (1), l'amplitude respective correspondante étant déterminée à partir des données de gyroscope.

7. Procédé selon l'une des revendications 1 à 6, les données d'accélération à polarisation compensée ($\vec{a}_{dec}$) étant compensées au moyen de données d'au moins un autre capteur (6) en ce qui concerne des données sur une inclinaison verticale.

8. Procédé selon la revendication 7, la compensation de l'inclinaison verticale de la donnée d'accélération à polarisation compensée ($\vec{a}_{dec}$) étant effectuée à partir d'une pente parcourue par le véhicule (1).

9. Procédé selon l'une des revendications 1 à 8, la détermination des données de polarisation ($\vec{b}$) pour le capteur dans au moins une direction effectuant une estimation des données de polarisation sur la base de la vitesse du véhicule (1) et/ou à l'aide de valeurs d'au moins un capteur supplémentaire (7).

10. Procédé selon les revendications 7 à 9, l'au moins un autre capteur et/ou capteur supplémentaire (6, 7) étant prévu sous la forme d'un capteur de pression et/ou d'un capteur GPS.

11. Procédé selon l'une des revendications 1 à 10, au moins partiellement des données ($\vec{g}$, $\vec{b}$, $\vec{a}_{dec}$, 4) pour chaque direction spatiale étant fournies, de préférence sous la forme d'un vecteur.

12. Système d'étalonnage en ligne d'un capteur (B) d'un véhicule, notamment d'un véhicule à deux roues, ledit système comprenant

un dispositif de détermination destiné à déterminer des premières données d'accélération au moins bidimensionnelles ($\vec{g}$, $\vec{b}$, $\vec{a}_{dec}$) à partir de valeurs de mesure d'un capteur d'accélération (2) pendant une phase d'accélération du véhicule (1), le véhicule (1) étant orienté dans une direction spatiale (3), et déterminer des deuxièmes données d'accélération au moins bidimensionnelles ($\vec{g}$, $\vec{b}$) pendant une phase sans accélération du véhicule, le véhicule étant orienté dans la même direction spatiale,

un dispositif de calcul destiné à déterminer des données d'accélération à polarisation compensée ($\vec{a}_{dec}$) dans le plan de l'axe longitudinal et vertical du véhicule sur la base des premières et deuxièmes données d'accélération déterminées ($\vec{g}$, $\vec{b}$, $\vec{a}_{dec}$; $\vec{g}$, $\vec{b}$),

un dispositif de polarisation destiné à déterminer des données de polarisation pour le capteur dans au moins une direction spatiale au moins sur la base de la vitesse du véhicule, et

un dispositif d'étalonnage destiné à étalonner le capteur à l'aide des données de polarisation déterminées et des données d'accélération à polarisation compensée.

# Fig. 1

3D                                                      3D

$$\vec{v_1} = \vec{g} + \vec{b} + \vec{a}_{dec} \qquad\qquad \vec{v_2} = \vec{g} + \vec{b}$$

$$\vec{a}_{dec} = \vec{v_1} - \vec{v_2}$$

# Fig. 2

# Fig. 3

Legend: X Axis Sensorframe, Y Axis Sensorframe, Z Axis Sensorframe

Y-axis: Drehrate in °/s (20, 10, 0, -10, -20)
X-axis: Zeit in s (0, 0.2, 0.4, 0.6, 0.8, 1.0, 1.2, 1.4, 1.6, 1.8)

11  10  12

# Fig. 4

S1 → S2 → S3 → S4 → S5 → S6 → S7

# Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2016211906 A

- DE 102015115282 A1

**In der Beschreibung aufgeführte Nicht-Patentliteratur**

- **SABATINI et al.** Kalman-Filter-Based Orientation Determination Using Inertial/Magnetic Sensors: Observability Analysis and Performance Evaluation. *Sensors,* 2011, vol. 11, 9182-9206